# EUROPÄISCHE PATENTANMELDUNG

(11) **EP 1 529 983 A2**
(43) Veröffentlichungstag der Anmeldung: **11.05.2005**
(21) Anmeldenummer: 04021304.3
(22) Anmeldetag: 08.09.2004
(51) Int. Cl.: F16F 15/26

(54) **Brennkraftmaschine mit mehreren Zylindern und einer Vorrichtung zum Massenausgleich**

(30) Priorität: 04.10.2003 DE 10346065
(71) Anmelder: DaimlerChrysler AG, 70567 Stuttgart (DE)
(72) Erfinder: Betsch, Jochen, Dr., 71334 Waiblingen (DE); Dettenmaier, Michael, 71364 Winnenden (DE); Heinrich, Dirk, 76131 Karlsruhe (DE); Jutz, Bernhard, 71576 Burgstetten (DE); Stolk, Thomas, 73230 Kirchheim (DE)

(57) **Zusammenfassung**

Die Erfindung betrifft eine Brennkraftmaschine mit mehreren Zylindern in einem Zylinderkurbelgehäuse, Kolben, die über jeweils ein Pleuel (3) mit einer Kurbelwelle verbunden sind, wobei die Pleuel in ihrer Bewegung einen Raum im Zylinderkurbelgehäuse, die sogenannte Pleuelgeige (7) durchfahren, und einer Vorrichtung zum Massenausgleich innerhalb des Zylinderkurbelgehäuses, die aus zwei Ausgleichswellen (8) für einen Massenausgleich zweiter Ordnung einer Brennkraftmaschine in Reihenbauart besteht und Gegengewichte (12) der Ausgleichswellen sich zeitweise innerhalb des von der Pleuelgeige umschriebenen Raumes bewegen. Die Ausgleichswellen (8) sind symmetrisch zu einer Mittenebene (2) durch die Zylindermitten der Brennkraftmaschine angeordnet.

## Beschreibung

Die Erfindung betrifft eine Brennkraftmaschine mit den Merkmalen des Oberbegriffs des Anspruches 1.

Aus der Offenlegungsschrift DE 100 32 095 A1 ist eine Brennkraftmaschine mit mehreren Zylindern in einem Zylinderkurbelgehäuse bekannt. In diesen Zylindern bewegen sich Kolben, die über Pleuel mit einer Kurbelwelle verbunden sind. Weiterhin ist in dem Zylinderkurbelgehäuse eine Ausgleichswelle angeordnet, deren Gegengewicht sich in den vom Pleuel durchfahrenen Raum, der sogenannten Pleuelgeige dreht. Die Ausgleichswelle ist als Massenausgleich erster Ordnung ausgeführt, d.h. sie dreht sich mit der Drehzahl der Kurbelwelle, jedoch in entgegengesetzter Drehrichtung. Die Kurbelwelle und die Ausgleichswelle arbeiten zusammen. ähnlich wie zwei Zahnräder mit jeweils einem Zahn, dem Pleuel und dem Gegengewicht. Auf diese Weise wird eine platzsparende Anordnung der Ausgleichswelle geschaffen.

Aufgabe der Erfindung ist es, eine Brennkraftmaschine mit einem Massenausgleich höherer Ordnung für eine Brennkraftmaschine bereitzustellen, der besonders platzsparend angeordnet ist.

Diese Aufgabe wird durch eine Brennkraftmaschine mit den Merkmalen des Anspruches 1 gelöst.

Die erfindungsgemäße Brennkraftmaschine zeichnet sich durch einen Massenausgleich zweiter Ordnung mit zwei Ausgleichswellen für eine Brennkraftmaschine in Reihenbauart aus, bei der die Gegengewichte der Ausgleichswellen sich zeitweise innerhalb des von der Pleuelgeige umschriebenen Raumes bewegen und die Ausgleichswellen symmetrisch zu einer Mittenebene durch die Zylindermitten der Brennkraftmaschine angeordnet sind.

Bei Brennkraftmaschinen in Reihenbauart mit beispielsweise vier Zylindern ist es möglich, einen hervorragenden Massenausgleich des Kurbeltriebes mittels eines sogenannten Lanchesterausgleiches bereitzustellen. Ein Lanchesterausgleich besteht aus zwei sich gegenläufig mit doppelter Kurbelwellendrehzahl drehenden Ausgleichswellen. Durch die doppelte Drehzahl der zwei Ausgleichswellen ist ein einfaches Eingreifen eines Gegengewichtes an einer Ausgleichswelle innerhalb des von der Pleuelgeige umschriebenen Raumes in eine vom Pleuel zeitweise geöffnete Lücke nicht ohne weiteres möglich. Jedoch ist aus Bauraum- und Funktionsgründen eine möglichst nahe Anordnung der Ausgleichswellen an der Kurbelwelle von Vorteil. Bei einer symmetrischen Anordnung der beiden Ausgleichswellen ist es möglich, die Gegengewichte der Ausgleichswellen so anzuordnen, dass sie sich in den von der Pleuelgeige umschriebenen Raum eindrehen können, wenn das Pleuel sich aufgrund der Kurbelwellendrehung an einer anderen Stelle befindet und zeitweise Raum in der Pleuelgeige freigegeben ist. Bei einer kurbelwellennahen Anordnung der Ausgleichswellen ergeben sich Vorteile im Geräusch- und Schwingungsverhalten, da die ausgleichenden Kräfte und Momente der Ausgleichswelle nur über eine kurze Strecke und nur wenige Füge- und Schnittstellen zum Kurbeltrieb hin übertragen werden müssen. Gleichzeitig hat man bei einem kurbelwellennahen Einbau der Ausgleichswellen eine größere Freiheit in der Anordnung von Nebenaggregaten an der Brennkraftmaschine im Einbau in ein Kraftfahrzeug, was die Verwendung der Brennkraftmaschine in gleicher Aufrüstung in verschiedenen Fahrzeugarten ermöglicht.

In einer weiteren Ausführung sind die Ausgleichswellen unterhalb der Mitte der Kurbelwelle angeordnet. Bei einer derartigen Anordnung der Ausgleichswellen lässt sich ein besonders platzsparender Massenausgleich erzielen, der auf die Aufrüstung mit Nebenaggregaten und den Einbau in verschiedene Fahrzeuge keinen Einfluss hat.

In einer weiteren Ausführung der Erfindung weisen die Verbindungslinien zwischen der Mitte der Kurbelwelle und den Mitten der Ausgleichswellen jeweils ungefähr einen Winkel von 45° +/- 10° zur Mittenebene durch die Zylindermitten der Brennkraftmaschine auf. Bei einer derartigen Anordnung der Ausgleichswellen ist das Pleuel während seiner Bewegung als Teil des Kurbeltriebes jeweils zu dem Zeitpunkt an einem anderen Ort, wenn die Gegengewichte an der Ausgleichswelle in den Raum der Pleuelgeige eindringen. Auf diese Weise lässt sich eine platzsparende Anordnung der beiden Ausgleichswellen eines sogenannten Lanchester-Ausgleichs zur Verfügung stellen. Ein großer Vorteil dieser Anordnung ist, dass keine für die Ausgleichswellen schädliche Aussparungen erforderlich sind.

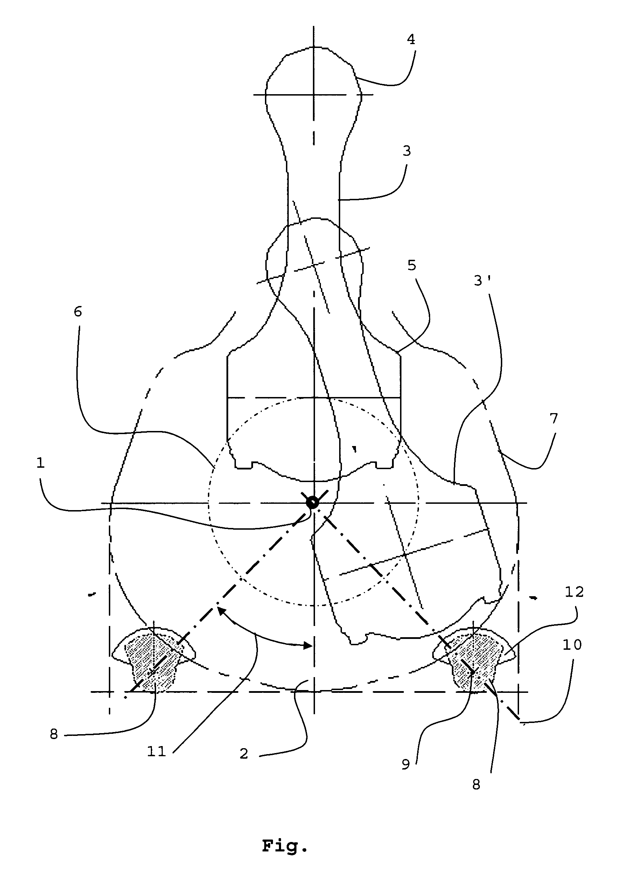

Weitere Merkmale und Merkmalskombinationen ergeben sich aus der Beschreibung sowie der Zeichnung. Konkrete Ausführungsbeispiele der Erfindung sind in der Zeichnung vereinfacht dargestellt und in der nachfolgenden Beschreibung näher erläutert.

Dabei zeigt die einzige Figur in einem stark vereinfachten Querschnitt den Bewegungsverlauf eines Pleuels einer Brennkraftmaschine mit zwei Ausgleichswellen.

In einer nicht näher gezeigten Brennkraftmaschine, die durch die Mitte 1 einer nicht gezeigten Kurbelwelle und eine Zylindermittenlinie 2 - in räumlicher Darstellung eine Mittenebene - symbolisiert ist, bewegt sich ein Pleuel 3.

Das Pleuel 3 bewegt sich an seinem kleinen Pleuelauge 4 auf der Zylindermittenlinie 2 und mit seinem großen Pleuelauge 5 auf einer Kreisbahn 6, die der Bewegungsbahn eines Hubzapfens der Kurbelwelle entspricht. Bei einer anderen Kurbelwellenstellung nimmt das Pleuel z.B. die Lage von Pleuel 3' ein. Der vom Pleuel 3 während einer Umdrehung der Kurbelwelle durchfahrene Raum wird in diesem Querschnitt mit der Linie 7, der Pleuelgeige, dargestellt.

Des weiteren sind zwei Ausgleichswellen 8 symmetrisch unterhalb der Mitte 1 der Brennkraftmaschine so angeordnet, dass sie parallel zur Kurbelwelle ausgerichtet sind, und ihre Mitten 9 jeweils auf einer Linie 10 liegen, die von der Mitte 1 einer Kurbelwelle ausgeht und einen Winkel 11 von ungefähr 45° zur Zylindermittenlinie 2 aufweist.

Ein Lanchesterausgleich für eine vierzylindrige Brennkraftmaschine in Reihenbauart mit üblicher Hubzapfenanordnung der Kurbelwelle verlangt, dass die beiden Ausgleichswellen 8 sich mit doppelter Kurbelwellendrehzahl gegenläufig drehen und dass Gegengewichte 12 in der oberen und unteren Totpunktlage der Kurbelwelle nach oben gerichtet sind. Totpunktlage bedeutet, dass die Kurbelwelle so gedreht ist, dass die großen Pleuelaugen 5 und die Mittellinien der Pleuel 3 sich in der gezeigten Ansicht mit der Zylindermittenlinie 2 decken. In der erfindungsgemäßen Anordnung der Ausgleichswellen 8 ist es möglich, die Ausgleichswellen so nahe an der Pleuelgeige 7 anzuordnen, dass die Gegengewichte 12 der Ausgleichswellen sich innerhalb der Pleuelgeige bewegen, mit dieser jedoch nicht kollidieren, da sich immer nur entweder das Pleuel 3 oder die Gegengewichte gleichzeitig im von beiden Bauteilen genutzten Bauraum befinden. Bei dieser Anordnung sind die beiden Ausgleichswellen 8 nicht schädlich für den Einbauraum der Brennkraftmaschine z.B. in ein Kraftfahrzeug, da weder die Einbaubreite noch die Einbauhöhe der Brennkraftmaschine vergrößert wird.

Andere bekannte Anordnungen von Ausgleichswellen 8 benötigen mehr Einbauraum und die Ausgleichswellen sind nicht in so großer räumlicher Nähe zum Kurbeltrieb der Brennkraftmaschine angeordnet, weil ein Verschieben der Ausgleichswellen entlang der Pleuelgeige 7 entweder die Einbaubreite oder die Einbauhöhe der Brennkraftmaschine vergrößert oder aber die Ausgleichsmassen durch Freigänge ungünstig beeinflusst werden.

Eine derartige Anordnung bzw. Lagerung der Ausgleichswellen 8 lässt sich auf einfache Weise in ein Kurbelgehäuse, Kurbelgehäuseunterteil oder in die Lagerung der Kurbelwelle integrieren, wodurch sich eine einfache und zueinander abgestimmte Montage und Toleranzlage der Teile ergibt.

## Patentansprüche

1. Brennkraftmaschine mit mehreren Zylindern in einem Zylinderkurbelgehäuse, Kolben, die über jeweils ein Pleuel (3) mit einer Kurbelwelle verbunden sind, wobei die Pleuel in ihrer Bewegung einen Raum im Zylinderkurbelgehäuse, die sogenannte Pleuelgeige (7) durchfahren, und einer Vorrichtung zum Massenausgleich innerhalb des Zylinderkurbelgehäuses,
**dadurch gekennzeichnet, dass** die Vorrichtung zum Massenausgleich aus zwei Ausgleichswellen (8) besteht für einen Massenausgleich zweiter Ordnung einer Brennkraftmaschine in Reihenbauart, wobei Gegengewichte (12) der Ausgleichswellen sich zeitweise innerhalb des von der Pleuelgeige (7) umschriebenen Raumes bewegen und dass die Ausgleichswellen symmetrisch zu einer Mittenebene (2) durch die Zylindermitten der Brennkraftmaschine angeordnet sind.

2. Brennkraftmaschine nach Anspruch 1,
**dadurch gekennzeichnet, dass** die Ausgleichswellen (8) unterhalb der Mitte (1) der Kurbelwelle angeordnet sind.

3. Brennkraftmaschine nach einem der Ansprüche 1 oder 2,
**dadurch gekennzeichnet, dass** die Verbindungslinien (10) zwischen der Mitte (1) der Kurbelwelle und den Mitten (9) der Ausgleichswellen (8) jeweils ungefähr einen Winkel von 45° +/- 10° zur Mittenebene (2) durch die Zylindermitten der Brennkraftmaschine aufweisen.
